# EUROPÄISCHE PATENTSCHRIFT

(11) **EP 3 079 950 B1**
(45) Veröffentlichungstag und Bekanntmachung des Hinweises auf die Patenterteilung: **21.02.2018**
(21) Anmeldenummer: 14812724.4
(22) Anmeldetag: 10.12.2014
(51) Int. Cl.: B60R 11/00

(54) **AUFBEWAHRUNGSVORRICHTUNG FÜR EIN FAHRZEUG MIT EINER BILDERFASSUNGSEINRICHTUNG**
STORAGE DEVICE FOR A VEHICLE WITH AN IMAGE-CAPTURING DEVICE
DISPOSITIF DE RANGEMENT ÉQUIPÉ D'UN SYSTÈME D'ACQUISITION D'IMAGES POUR VÉHICULE

(30) Priorität: 11.12.2013 DE 102013225670
(43) Veröffentlichungstag der Anmeldung: 19.10.2016
(73) Patentinhaber: Brose Fahrzeugteile GmbH & Co. Kommanditgesellschaft, Coburg, Max-Brose-Straße 1 96450 Coburg (DE)
(72) Erfinder: RIENECKER, Maik, 96117 Memmelsdorf (DE); BAUERNFEIND, Markus, 96450 Coburg (DE); TREICHL, Markus, 96484 Meeder (DE)
(74) Vertreter: Maikowski & Ninnemann Patentanwälte Partnerschaft mbB
(86) Internationale Anmeldenummer: PCT/EP2014/077108
(87) Internationale Veröffentlichungsnummer: WO 2015/086633

(56) Entgegenhaltungen:
- EP-A2- 1 854 672
- DE-A1- 10 027 373

## Beschreibung

Die vorliegende Erfindung betrifft eine Aufbewahrungsvorrichtung nach dem Oberbegriff des Anspruchs 1 sowie ein Verfahren zur Bereitstellung wenigstens eines von mehreren Fächern einer Aufbewahrungsvorrichtung nach dem Oberbegriff des Anspruchs 14.

Aus dem Stand der Technik sind unterschiedliche Aufbewahrungsvorrichtungen für ein Fahrzeug bekannt, die mehrere Fächer zur Ablage von Gegenständen aufweisen. Derartige Aufbewahrungsvorrichtungen sind beispielsweise in Mittelkonsolen integriert und unterhalb von Mittelarmlehnen vorgesehen. Die (Ablage-)Fächer dieser Ablagevorrichtungen könnten unterschiedliche Größen haben und beinhalten Aufnahmen zum Beispiel für Getränkedosen, Schreibutensilien oder ähnliches. Je nach Ausführung der Mittelkonsolen sind die Fächer relativ tief ausgeführt und damit während der Fahrt zum Auffinden von darin abgelegten Gegenständen relativ ungünstig. Eine Suche nach einem bestimmten Gegenstand innerhalb des jeweiligen Faches ist häufig nur möglich, ohne dass ein Nutzer das Fach, insbesondere während der Fahrt einsehen kann. Derart besteht die Notwendigkeit, den gesuchten Gegenstand durch taktiles Erkennen zu identifizieren.

Aus der DE 100 27 373 A1 ist wiederum eine Aufbewahrungsvorrichtung für ein Fahrzeug bekannt, die beispielsweise in eine Mittelkonsole integriert werden kann und bei der mehrere Aufbewahrungseinheiten mit jeweils einem Fach zur Aufnahme von Gegenständen über eine Verstelleinrichtung innerhalb eines abgeschlossenen Aufnahmeraums der Aufbewahrungsvorrichtung verstellt werden können. Über einen motorischen Antrieb der Verstelleinrichtung können die einzelnen Aufbewahrungseinheiten auf Wunsch eines Nutzers zu einer Entnahmeöffnung verfahren werden, so dass über diese Entnahmeöffnung dann die gewünschte Aufbewahrungseinheit und deren Fach für einen Nutzer zugänglich ist. Mit einer derartigen Aufbewahrungsvorrichtung ist zumindest erreicht, dass unterschiedliche Arten von Gegenständen in unterschiedlichen Aufbewahrungseinheiten sortiert abgelegt werden können. Die Verstellung der einzelnen Antriebseinheiten innerhalb des Aufnahmeraums der Aufbewahrungsvorrichtung wird beispielsweise über ein umlaufendes Antriebselement, zum Beispiel einen Riemen, ein Band oder eine Kette erreicht, an das die einzelnen Aufbewahrungseinheiten gekoppelt werden können.

Ausgehend von dem genannten Stand der Technik liegt der vorliegenden Erfindung die Aufgabe zugrunde, eine Aufbewahrungsvorrichtung für ein Fahrzeug weiter zu verbessern und insbesondere das Auffinden eines bestimmten Gegenstands innerhalb der Aufbewahrungsvorrichtung für einen Nutzer zu erleichtern.

Diese Aufgabe wird sowohl mit einer Aufbewahrungsvorrichtung gemäß dem Anspruch 1 als auch mit einem Verfahren gemäß dem Anspruch 14 gelöst.

Dabei weist eine Aufbewahrungsvorrichtung für ein Fahrzeug mehrere Fächer zur Ablage von Gegenständen auf und umfasst insbesondere:
- einen Aufnahmeraum mit einer Entnahmeöffnung,
- mindestens eine innerhalb des Aufnahmeraums untergebrachte Aufbewahrungseinheit mit mindestens einem Fach und
- eine Verstelleinrichtung, mittels der die mindestens eine Aufbewahrungseinheit innerhalb des Aufnahmeraums verstellbar ist, so dass es von der Stellung der Aufbewahrungseinheit abhängt, ob ein bestimmtes Fach der Aufbewahrungsvorrichtung über die Entnahmeöffnung für einen Nutzer zugänglich ist.

Dabei können unterschiedliche Fächer an einer Aufbewahrungseinheit vorgesehen sein und/oder unterschiedliche Fächer an unterschiedlichen Aufbewahrungseinheiten.

Beispielsweise kann jede verstellbare Aufbewahrungseinheit somit mehrere Fächer oder auch nur genau ein Fach aufweisen.

Erfindungsgemäß weist die Aufbewahrungsvorrichtung zusätzlich
- einen elektronischen Speicher und eine Bilderfassungseinrichtung auf, mittels der wenigstens ein Bild von einem Inhalt eines der Fächer erstellt und in dem Speicher abgelegt werden kann, sowie
- eine elektronische Steuereinheit, mittels der ein von der Bilderfassungseinrichtung erstelltes und in dem Speicher abgelegtes Bild an einer Anzeigevorrichtung anzeigbar ist, wobei mittels der Steuereinheit zudem ein bestimmtes, von einem Nutzer - vorzugsweise über die Anzeigevorrichtung - ausgewähltes Fach mit Hilfe der Verstelleinrichtung für den Nutzer über die Entnahmeöffnung zugänglich bereitgestellt werden kann.

Auf diese Weise wird das Auffinden eines bestimmten Gegenstandes innerhalb der Aufbewahrungsvorrichtung für einen Nutzer erheblich erleichtert ebenso wie das Auffinden eines noch leeren Faches, in das der Nutzer einen Gegenstand ablegen kann. So werden dem Nutzer über die Anzeigevorrichtung die jeweiligen Inhalte der in der Aufbewahrungsvorrichtung vorhandenen Fächer angezeigt, so dass der Nutzer an der Anzeigevorrichtung visuell darüber informiert wird, ob ein Gegenstand und gegebenenfalls welcher Gegenstand oder welche Gegenstände innerhalb des jeweiligen Faches vorhanden ist bzw. sind. Mittels der Steuereinheit kann ein ausgewähltes Fach für den Nutzer über die Entnahmeöffnung zugänglich gemacht werden, so dass der Nutzer aus diesem Fach einen Gegenstand entnehmen und/oder einen Gegenstand in dem Fach ablegen kann. Sollte sich nach dem Auswählen eines bestimmten Faches durch den Nutzer die zu dem ausgewählten Fach gehörende Aufbewahrungseinheit noch nicht in einer Verstelllage befinden, in der dieses Fach über die Entnahmeöffnung zugänglich ist, steuert die Steuereinrichtung hierfür die Verstelleinrichtung derart an, dass die Aufbewahrungseinheit entsprechend innerhalb des Aufnahmeraums verstellt wird.

In einer Ausführungsvariante ist durch den Nutzer ein zu einem gespeicherten Bild gehörendes Fach direkt über die Anzeigevorrichtung auswählbar und das ausgewählte Fach wird mittels der Steuereinheit für den Nutzer über die Entnahmeöffnung zugänglich bereitgestellt. Die Anzeigevorrichtung sieht somit eine Eingabemöglichkeit für den Nutzer vor, um anhand eines - vorzugsweise an einem Bildschirm der Anzeigevorrichtung gerade - angezeigten Bildes des Inhalts eines Faches das jeweilige Fach auszuwählen und automatisch eine Aufbewahrungseinheit oder mehrere Aufbewahrungseinheiten der Aufbewahrungsvorrichtung so zu verfahren, dass dieses Fach für den Nutzer zugänglich ist. Die Anzeigevorrichtung kann hierfür beispielsweise einen Touchscreen umfassen.

Die Steuereinheit weist vorzugsweise eine Steuerelektronik auf, die automatisch das Erstellen eines Bildes mittels der Bilderfassungseinrichtung auslöst, wenn das Auftreten mindestens eines vorgegebenen Bedienereignisses detektiert wurde. Hierunter wird beispielsweise verstanden, dass detektiert wird, wenn ein Nutzer einen Gegenstand in ein Fach legt oder einen Gegenstand aus einem Fach entnimmt und dann die Bilderfassungseinrichtung automatisch ein Bild von diesem Fach erstellt, um später den Nutzer an der Anzeigevorrichtung über dessen aktuellen Inhalt informieren zu können.

In einem Ausführungsbeispiel ist die Entnahmeöffnung durch ein verstellbares Verschlusselement, zum Beispiel bei einer Mittelkonsole durch eine Armauflage, verschließbar. Die Steuerelektronik ist hierbei dazu ausgebildet und vorgesehen, das Erstellen eines Bildes von dem Inhalt desjenigen Faches auszulösen, das über die Entnahmeöffnung zugänglich ist, wenn das Verschlusselement in eine Öffnungsposition und anschließend in eine Schließposition verstellt wird, in der die Entnahmeöffnung durch das Verschlusselement verschlossen ist. Derart wird das Erstellen eines Bildes insbesondere durch eine Verstellung eines Verschlusselements der Aufbewahrungsvorrichtung ausgelöst, so dass jedes Mal, wenn ein Fach mit einem neuen Gegenstand bestückt oder aus diesem Fach ein Gegenstand entnommen werden könnte, ein aktualisiertes Bild von dessen Inhalt erzeugt und abgespeichert wird.

Dabei kann selbstverständlich auch vorgesehen sein, dass der Inhalt unterschiedlicher Fächer nacheinander oder gleichzeitig erfasst wird, die in einer Öffnungsposition des Verschlusselements über die Entnahmeöffnung zugänglich sind oder zugänglich gemacht werden. So kann es beispielsweise vorkommen, dass ein Nutzer in einer Öffnungsposition des Verschlusselements die Verstelleinrichtung betätigt und die Aufbewahrungseinheit(en) der Aufbewahrungsvorrichtung verstellt, so dass damit in einer Öffnungsposition des Verschlusselements der Inhalt unterschiedlicher Fächer verändert werden kann. In einem derartigen Ausführungsbeispiel soll über die Steuerungseinheit weiterhin gewährleistet sein, dass der jeweils aktuelle Inhalt der Fächer von der Bilderfassungseinrichtung dokumentiert und über die Anzeigevorrichtung abrufbar ist.

Eine Anzeigevorrichtung ist vorzugsweise innerhalb des Fahrzeugs vorgesehen. Beispielsweise kann eine Anzeigevorrichtung ein Display an einer Mittelkonsole, ein Display am Armaturenbrett des Fahrzeugs und/oder ein Head-up-Display des Fahrzeugs umfassen.

Alternativ oder ergänzend ist eine Anzeigevorrichtung außerhalb des Fahrzeugs nutzbar. Hierbei kann es sich beispielsweise um ein aus dem Fahrzeug entnehmbares Display oder um ein mobiles Endgerät, wie zum Beispiel ein Smartphone handeln. Derart kann ein Nutzer beispielsweise über eine App an seinem Smartphone, als externe Anzeigevorrichtung überprüfen, welche Gegenstände in der Aufbewahrungsvorrichtung seines Fahrzeugs untergebracht sind und ob er eventuell in dem Fahrzeug einen bestimmten Gegenstand vergessen hat. Hierbei kann eine Ausführungsvariante vorgesehen sein, bei der an der außerhalb des Fahrzeugs nutzbaren Anzeigevorrichtung keine Auswahl eines bestimmten Faches möglich ist, um dieses an der Entnahmeöffnung bereitzustellen, sondern nur über die angezeigten Bilder eine Information für den Nutzer über den Inhalt der einzelnen Fächer der Aufbewahrungsvorrichtung innerhalb des Fahrzeugs ermöglicht wird. Während somit beispielsweise über ein fahrzeugfestes und/oder internes Display einer ersten Anzeigevorrichtung die Fächerinhalte einsehbar sind und die Verstelleinrichtung der Aufbewahrungsvorrichtung ansteuerbar ist, sind über eine zusätzliche zweite externe Anzeigevorrichtung nur die Fächerinhalte einsehbar.

In einer Weiterbildung ist vorgesehen, dass die von der Bilderfassungseinheit der Aufbewahrungsvorrichtung erstellten und abgespeicherten Bilder an einem mobilen Endgerät abrufbar sind und die Aufbewahrungsvorrichtung hierfür Mittel zur drahtlosen Kommunikation zwischen dem mobilen Endgerät und der Steuereinheit aufweist. Beispielsweise kann die elektronische Steuereinheit selbst hierfür Mittel, beispielsweise in Form einer Sender-Empfänger-Einrichtung, umfassen, um drahtlos mit dem mobilen Endgerät zu kommunizieren. Die Mittel können hierbei jeweils zum Beispiel für eine Kommunikation über ein Netzwerk (LAN), über ein Mobilfunknetz (GSM, UMTS, LTE, etc.) und/oder Bluetooth vorgesehen sein.

In einer Ausführungsvariante ist ferner eine Eingabevorrichtung vorgesehen, mittels der ein Nutzer zu dem Inhalt des jeweiligen Faches eine Eingabe vornehmen und abspeichern kann. Die Eingabe kann hierbei beispielsweise in Textform erfolgen und/oder als Spracheingabe. So kann der Nutzer zu dem Inhalt des jeweiligen Faches eine zusätzliche Information in dem Speicher hinterlegen, die das spätere Auffinden eines gewünschten, in dem Fach abgelegten Gegenstands erleichtert.

Dementsprechend kann auch vorgesehen sein, dass zu den einzelnen Fächern eingegebene und abgespeicherte Eingaben mittels der Steuereinheit durch einen Nutzer durchsuchbar sind, um nach einer bestimmten Eingabe suchen zu können. So kann ein Nutzer beispielsweise zu einem bestimmten Fach in Ergänzung zu dem abgespeicherten Bild einen Text - zum Beispiel "Eiskratzer", "Taschenlampe", "Fahrzeugschein", "Getränke", etc. - hinterlegen und sich später über die Anzeigevorrichtung die Bilder zu denjenigen Fächern anzeigen lassen, zu denen eine übereinstimmende Eingabe vorgenommen wurde. So kann sich ein Nutzer beispielsweise alle Fächer auf einem Display der Anzeigevorrichtung anzeigen lassen, die Getränke enthalten.

Die Verstelleinrichtung der Aufbewahrungsvorrichtung kann wenigstens ein umlaufendes und vorzugsweise mindestens zweimal umgelenktes Antriebselement zum Verstellen der mindestens einen Aufbewahrungseinheit umfassen. Das Antriebselement ist beispielsweise als Riemen, Band oder Kette ausgebildet. Eine Verstelleinrichtung mit einem derartigen Antriebselement zeichnet sich üblicherweise durch eine hohe Zuverlässigkeit und die Möglichkeit für eine besonders platzsparende und kostengünstige Konstruktion aus. So sind beispielsweise Riemen- und Kettentriebe für Verstelleinrichtung weithin bekannt und können sehr kompakt ausgebildet werden, um mehrere Ausbewahrungseinheiten innerhalb eines Aufbewahrungsraumes verstellen zu können. Die einzelnen Aufbewahrungseinheiten können hier beispielsweise nach Art eines Paternosters in dem Aufbewahrungsraum untergebracht und verstellbar sein.

Mehrere Aufbewahrungseinheiten einer Aufbewahrungsvorrichtung können folglich mit dem wenigstens einen umlaufenden Antriebselement gekoppelt und bezogen auf eine Umlaufrichtung des Antriebselements hintereinander angeordnet sein. Indem dann ein Antriebsmotor der Verstelleinrichtung entsprechend lange angesteuert wird, kann eine bestimmte Aufbewahrungseinheit mit dem von einem Nutzer ausgewählten Fach so positioniert werden, dass ihr Fach im Bereich der Entnahmeöffnung vorliegt und das Fach über die Entnahmeöffnung für einen Nutzer zugänglich ist.

In einer Ausführungsvariante ist die Aufbewahrungsvorrichtung in eine Mittelkonsole eines Fahrzeugs integriert. Es ist aber selbstverständlich auch denkbar, eine erfindungsgemäße Aufbewahrungsvorrichtung an einer anderen Stelle innerhalb eines Fahrzeugs vorzusehen und hierdurch in einem relativ kleinen Stauraum mit den unterschiedlichen Fächern der Aufbewahrungsvorrichtung verschiedene Gegenstände sortiert und gegebenenfalls katalogisiert unterzubringen. Dabei steht jedoch stets im Vordergrund, dass einem Benutzer an einer Anzeigevorrichtung Bildinformationen zu dem Inhalt der einzelnen Fächer vorliegen und der Nutzer somit die in der Aufbewahrungsvorrichtung untergebrachten Gegenstände einfach und schnell überblicken kann.

Ein weiterer Aspekt der vorliegenden Erfindung ist ein Verfahren gemäß dem Anspruch 14 zur Bereitstellung wenigstens eines von mehreren Fächern einer Aufbewahrungsvorrichtung für ein Fahrzeug, so dass dieses Fach für einen Nutzer zur Entnahme eines Gegenstands aus dem Fach und/oder zum Ablegen eines Gegenstands in dem Fach zugänglich ist.

Eine im Rahmen dieses Verfahrens genutzte Aufbewahrungsvorrichtung weist demgemäß analog zu den vorherigen Ausführungen wenigstens einen Aufnahmeraum mit einer Entnahmeöffnung, mindestens eine innerhalb des Aufnahmeraums untergebrachte Aufbewahrungseinheit mit mindestens einem Fach und eine Verstelleinrichtung zur Verstellung der Aufbewahrungseinheit(en) innerhalb des Aufnahmeraums auf.

Bei einem erfindungsgemäß Verfahren ist dann vorgesehen, dass
- von einem Inhalt eines jeden Faches der Aufbewahrungsvorrichtung mindestens ein Bild erstellt und abgespeichert wird und
- die gespeicherten Bilder an einer Anzeigevorrichtung angezeigt werden, so dass ein Nutzer anhand eines angezeigten Bildes ein bestimmtes Fach auswählen kann und mit Hilfe der Verstelleinrichtung ein von dem Nutzer ausgewähltes Fach über die Entnahmeöffnung zugänglich bereitgestellt wird.

Ein erfindungsgemäßes Verfahren stellt damit eine verbesserte Möglichkeit bereit, einem Nutzer einen visuellen Eindruck von dem Inhalt einer Aufbewahrungseinrichtung mit mindestens einer verstellbaren Aufbewahrungseinheit zu verschaffen. Mit Hilfe der Verstelleinrichtung wird hierbei ein von dem Nutzer an der Anzeigevorrichtung ausgewähltes Fach derart positioniert, dass dieses Fach für den Nutzer zugänglich ist.

Bei einem erfindungsgemäßen Verfahren kann selbstverständlich eine erfindungsgemäße Aufbewahrungsvorrichtung zum Einsatz kommen. Somit gelten die zuvor für Ausführungsbeispiele einer erfindungsgemäßen Aufbewahrungsvorrichtung erläuterten Vorteile und Merkmale auch für ein erfindungsgemäßes Verfahren und umgekehrt.

Weitere Vorteile und Merkmale der vorliegenden Erfindung werden bei der nachfolgenden Beschreibung von Ausführungsbeispielen anhand der Figuren deutlich werden.

Hierbei zeigen:
- Fig. 1: schematisch eine in einer Mittelkonsole integrierte Aufbewahrungsvorrichtung mit einer innerhalb der Mittelkonsole angeordneten Kamera als Bilderfassungseinrichtung;
- Fig. 2A- 2B: jeweils in perspektivischer Ansicht unterschiedliche Ausführungsvarianten für Aufbewahrungseinheiten einer Aufbewahrungsvorrichtung, die über ein umlaufendes und zweimal umgelenktes Antriebselement verstellbar gelagert sind;
- Fig. 3: schematisch den Aufbau einer erfindungsgemäßen Aufbewahrungsvorrichtung mit einer Sender-Empfänger-Einrichtung zur drahtlosen Kommunikation mit einem mobilen Endgerät;
- Fig. 4A: ein Ablaufdiagramm zur Funktionsweise eines Ausführungsbeispiels einer erfindungsgemäßen Aufbewahrungsvorrichtung beim Einlegen eines neuen Gegenstands in ein Fach;
- Fig. 4B: ein weiteres Ablaufdiagramm zur Funktionsweise eines Ausführungsbeispiels einer erfindungsgemäßen Aufbewahrungsvorrichtung bei der Auswahl eines bestimmten Faches durch einen Nutzer.

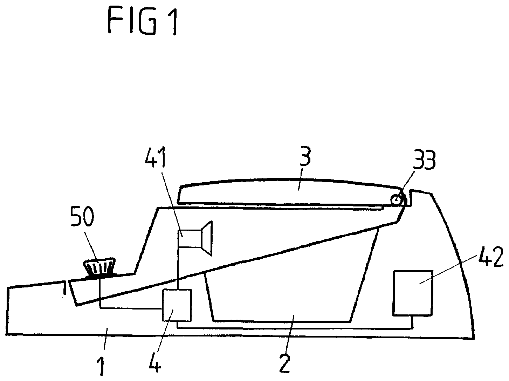

Die Figur 1 zeigt schematisch in geschnittener Seitenansicht eine in eine Mittelkonsole 1 integrierte Aufbewahrungsvorrichtung. Innerhalb der Mittelkonsole 1 ist ein Aufnahmeraum 2 der Aufbewahrungsvorrichtung ausgebildet, der an seiner Oberseite eine Entnahmeöffnung aufweist. Diese Entnahmeöffnung ist über ein Verschlusselement in Form einer Armauflage 3 verschließbar, die um eine Schwenkachse 33 verschwenkbar gelagert ist.

Innerhalb des Aufnahmeraums 2 sind mehrere in der Figur 1 nicht dargestellte Aufbewahrungseinheiten der Aufbewahrungsvorrichtung untergebracht, die über eine Verstelleinrichtung 42 mit einem motorischen Antrieb verstellbar sind. Jede dieser Aufbewahrungseinheiten bildet mindestens ein Fach zur Aufnahme eines Gegenstands aus und kann über die Verstelleinrichtung 42 so innerhalb des Aufnahmeraums 2 verfahren werden, dass ihr Fach bzw. ihre Fächer unterhalb der Armauflage 3 der Mittelkonsole 1 vorliegen und damit über die Entnahmeöffnung zugänglich sind.

Die Verstelleinrichtung 42 wird über eine elektronische Steuereinheit 4 mit einer integrierten Steuerelektronik und einem Speicher gesteuert. Über ein mit der Steuereinheit 4 gekoppeltes Steuerelement in Form eines Bedienknopfs 50 an der Mittelkonsole 1 kann ein Nutzer die Aufbewahrungseinheiten innerhalb des Aufnahmeraums 2 verstellen, so dass ein gewünschtes Fach an der Oberseite der Mittelkonsole 1 zugänglich ist und ein Nutzer hierüber einen Gegenstand aus dem jeweiligen Fach entnehmen oder in dieses Fach hineinlegen kann. Über den Bedienknopf 50 eingegebene Steuerbefehle werden dabei von der Steuereinheit 4 ausgewertet und zur Steuerung der Verstelleinrichtung 42 genutzt. Eine insoweit funktional vergleichbare Aufbewahrungsvorrichtung, die in eine Mittelkonsole integriert ist, ist im Übrigen auch aus der DE 100 27 373 A1 bekannt.

Das erfindungsgemäße Ausführungsbeispiel weist nun ferner eine in die Mittelkonsole 1 integrierte Bilderfassungseinrichtung in Form einer Kamera 41 auf. Die Kamera 41 nimmt automatisch Bilder der Fächer der Aufbewahrungsvorrichtung auf und legt diese in einem Speicher der Steuereinheit 4 ab. Die Fächer können dabei an der Kamera 41 vorbeigeführt werden und/oder die Kamera 41 ist hierfür innerhalb des Aufnahmeraums 2 so positioniert, dass ein Fach, das über die Entnahmeöffnung an der Oberseite der Mittelkonsole 1 (gerade) zugänglich ist, der Kamera 41 gegenüberliegt. In jedem Fall steuert die Steuereinheit 4 die Kamera 41 so an, dass zu jedem Fach der Aufbewahrungsvorrichtung ein Bild zu dessen Inhalt existiert und/oder zumindest eine Information darüber vorliegt, ob sich in dem jeweiligen Fach ein Gegenstand befindet oder nicht. Beispielsweise kann über die Kamera 41 ein Bild des Inhalts eines Faches erstellt werden, wenn das Fach erstmalig in eine Entnahmeposition verfahren wurde, in der es über die Entnahmeöffnung zugänglich ist. Derart wird erst eine Aufnahme von dem Inhalt des jeweiligen Faches gemacht, wenn auch die Möglichkeit bestand, dass hierin ein Gegenstand abgelegt worden ist.

Bevorzugt ist in dem Speicher der Steuereinheit 4 zu jedem Fach der Aufbewahrungsvorrichtung stets nur ein aktuelles Bild vorgehalten, das über eine Anzeigevorrichtung innerhalb und/oder außerhalb des Fahrzeugs abrufbar ist. In einer Weiterbildung können aber auch mehrere Bilder zu einem Fach abgespeichert sein, wobei ein Bild den aktuellen Inhalt des jeweiligen Faches zeigt und die weiteren Bilder einen vorherigen Inhalt desselben Faches zu zeitlich früheren Zeitpunkten zeigen. Derart ist es einem Nutzer über die abgelegten Bilder beispielsweise möglich, herauszufinden, wann ein bestimmter Gegenstand aus einem Fach entnommen wurde.

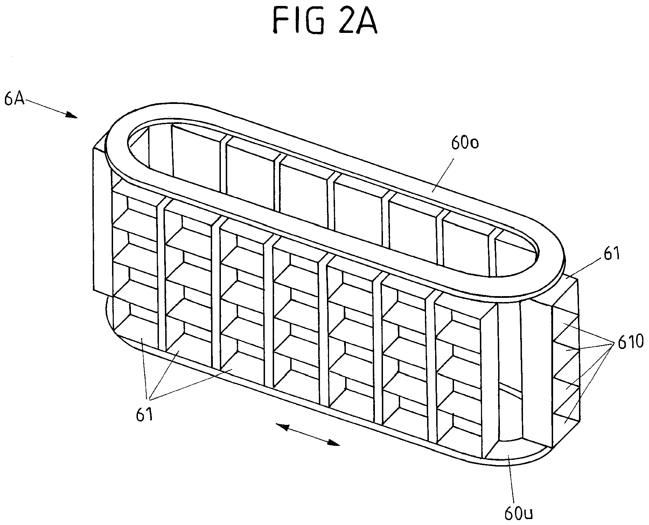

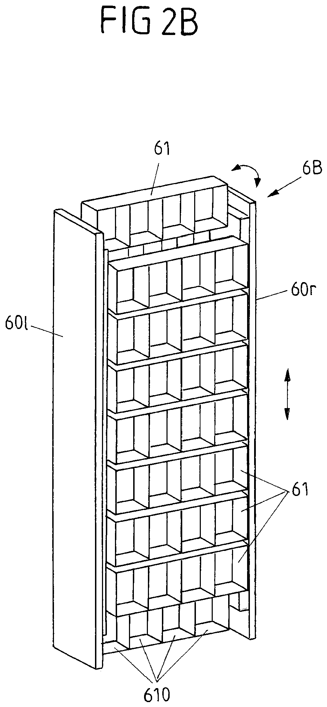

Mit den Figuren 2A und 2B werden unterschiedliche Ausführungsbeispiele für in dem Aufnahmeraum 2 unterzubringende Lagereinheiten 6A und 6B veranschaulicht. Jede Lagereinheit 6A oder 6B weist mehrere Aufbewahrungseinheiten in Form von Lagerkassetten 61 mit mehreren übereinander oder nebeneinander angeordneten Fächern 610 auf. Die einzelnen Lagerkassetten 61 sind dabei jeweils zwischen zwei Führungselementen 60o, 60u oder 60l, 60r eingefasst.

Im Fall der Lagereinheit 6A gemäß der Figur 2A sind die einzelnen hier quaderförmig dargestellten Lagerkassetten 61 zwischen einem oberen Führungselement 60o und einem unteren Führungselement 60u angeordnet, die die Ober- bzw. Unterseite der Lagereinheit 6A bilden und zwischen denen die Lagerkassetten 61 verstellbar geführt sind. Die Führungselemente 60o und 60u weisen jeweils zwei sich gegenüberliegende abgerundete Enden auf. Innerhalb der oder an den Führungselementen 60o und 60u entlang ist mindestens ein längserstrecktes, umlaufendes Antriebselement, z. B. ein Riemen, ein Band oder eine Kette, geführt und an den beiden abgerundeten Enden umgelenkt. Mit diesem Antriebselement sind die einzelnen Lagerkassetten 61 jeweils gekoppelt, so dass durch Antreiben des Antriebselements oder der Antriebselemente die - bezogen auf die Erstreckungsrichtung und Umlaufrichtung des Antriebselements - hintereinander angeordneten Lagerkassetten 61 verstellt werden können.

Bei der Lagereinheit 6B der Figur 2B sind die einzelnen Lagerkassetten 61 zwischen zwei seitlichen Führungselementen 60l und 60r eingefasst. Auch hier ist an den Führungselementen 60l und 60r wenigstens ein umlaufendes Antriebselement angeordnet, mit dem die einzelnen Lagerkassetten 61 gekoppelt sind. Die Lagerkassetten 61 der Lagereinheit 6B sind dabei an den seitlichen Führungselementen 60l und 60r derart angeordnet und von dem wenigstens einen Antriebselement angetrieben, dass die Lagerkassetten 61 nach Art eines Paternosters verstellt werden. Die einzelnen Lagerkassetten 61 sind somit an den Führungselementen 60l und 60r derart geführt und mit dem wenigstens einen umlaufenden Antriebselement derart gelenkig gekoppelt, dass die Lagerkassetten 61 bei einem Umlauf stets gleich in Bezug auf eine Vertikale ausgerichtet bleiben.

Über die exemplarisch in den Figuren 2A und 2B dargestellten Lagereinheiten 6A und 6B sind innerhalb eines Aufnahmeraums 2 der Mittelkonsole 1 eine Vielzahl unterschiedlicher Gegenstände in den verschiedenen Fächern 610 unterzubringen. Je nach Stellung der Lagerkassetten 61 liegt eine der Lagerkassetten 61 mit ihren mehreren Fächern 610 an der durch die Armauflage 3 verschlossenen Entnahmeöffnung der Aufbewahrungsvorrichtung so vor, dass durch einen Nutzer Gegenstände in den Fächern 610 abgelegt oder aus diesen heraus entnommen werden können.

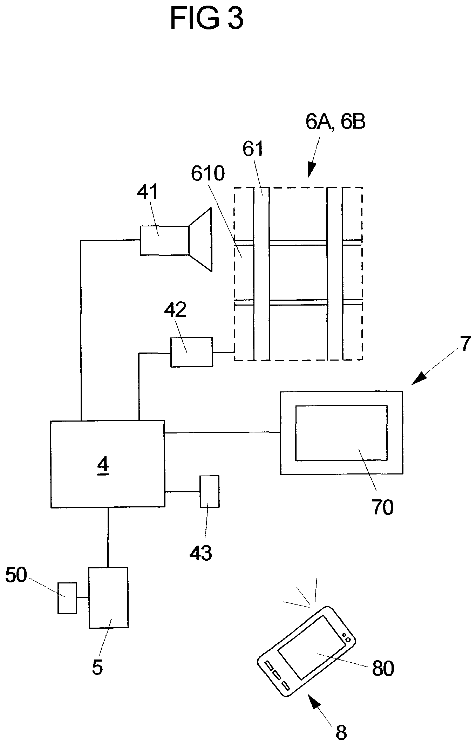

Wie in der Figur 3 schematisch dargestellt ist, wird hierbei zu dem Inhalt eines jeden Faches 610 über die Kamera 41 ein Bild erstellt und abgespeichert, das von der Steuereinheit 4 an einer Anzeigevorrichtung in Form einer Displayeinheit 7 innerhalb des Fahrzeugs abrufbar zur Verfügung gestellt wird. Die innerhalb des Fahrzeugs angeordnete Displayeinheit 7 weist einen Bildschirm 70 auf, der zum Beispiel an der Mittelkonsole 1 oder an dem Armaturenbrett des Fahrzeugs angeordnet ist. Durch Anwahl eines auf den Bildschirm 70 dargestellten Bildes des Inhalts des jeweiligen Faches 610 kann dieses Fach 610 ausgewählt werden. Die Steuereinheit 4 veranlasst dann einen Antrieb der Verstelleinrichtung 42 die zugehörige Lagerkassette 41 so zu verstellen, dass das ausgewählte Fach 610 an der Entnahmeöffnung unterhalb der Armauflage 3 zugänglich ist.

Alternativ oder ergänzend kann über eine elektronische Eingabevorrichtung, die z. B. den Bedienknopf 50 umfasst, die Verstelleinrichtung 42 angesteuert werden, um ein bestimmtes Fach 610 bzw. eine bestimmte Lagerkassette 61 so innerhalb des Aufnahmeraums 2 zu verstellen, dass eine Zugänglichkeit für den Nutzer gegeben ist, wenn der Nutzer die Armauflage 3 in eine Öffnungsposition verschwenkt

Über die Eingabevorrichtung 5 kann des Weiteren eine Eingabe durch einen Benutzer erfolgen, um den Inhalt eines Faches 610 näher zu beschreiben und/oder den Speicher der Steuereinheit 4 leichter durchsuchen zu können. So kann ein Nutzer über die Eingabevorrichtung 5 beispielsweise einen Text eingeben, der einen in einem Fach 610 abgelegten Gegenstand beschreibt, nachdem dieser in dem jeweiligen Fach 610 platziert wurde. Das zugehörige Fach 610 kann dann später durch Suchen nach dem verwendeten Begriff, z.B. auch durch Nennung des Begriffs bei von der Eingabevorrichtung 5 bereitgestellten Mitteln zur Sprachsteuerung, ausgewählt werden.

Darüber hinaus verfügt die Steuereinheit 4 der Figur 3 über eine Sender-Empfänger-Einrichtung 43, mittels der eine drahtlose Kommunikation mit einem Mobilgerät 8, z. B. in Form eines Smartphones, möglich ist. Das Mobilgerät 8 verfügt über einen Bildschirm 80, über den ebenfalls die in dem Speicher der Steuereinheit 4 hinterlegten Bilder zu dem Inhalt der einzelnen Fächer 610 abrufbar sind. Derart kann ein Nutzer auch von außerhalb des Fahrzeugs, z. B. über eine entsprechende auf dem Mobilgerät 8 installierte Softwareanwendung (üblicherweise kurz "App") den Inhalt der einzelnen Lagerkassetten 61 betrachten, um beispielsweise zu ermitteln, ob er etwas darin vergessen hat.

In einer Weiterbildung können über das Mobilgerät 8 auch Steuerbefehle an die Steuereinheit 4 gesendet werden, um die Lagerkassetten 61 zu verstellen und an der Kamera 41 vorbeizuführen. Hierdurch kann ein Nutzer aus der Ferne die einzelnen Fächer 610 in Echtzeit durchsuchen. Für eine Reduzierung der zu übertragenen Daten wird es aber als vorteilhafter erachtet, wenn an dem Mobilgerät 8 (auch) nur die bereits von der Kamera 41 erstellten und in dem Speicher der Steuereinheit 4 abgelegten Bilder zum Inhalt der einzelnen Fächer 610 an dem Bildschirm 80 des Mobilgeräts 8 angezeigt werden können. Hierfür können in der entsprechenden Softwareanwendung für das Mobilgerät 8 beispielsweise auch einem Betriebsmodus von wenigstens zwei Betriebsmodi vorgesehen werden; ein erster Betriebsmodus zum Betrachten der Fächerinhalte in Echtzeit, gegebenenfalls mit Steuerungsmöglichkeit für die Verstelleinrichtung 42, und ein zweiter Betriebsmodus zum ausschließlichen Betrachten der abgespeicherten Bilder.

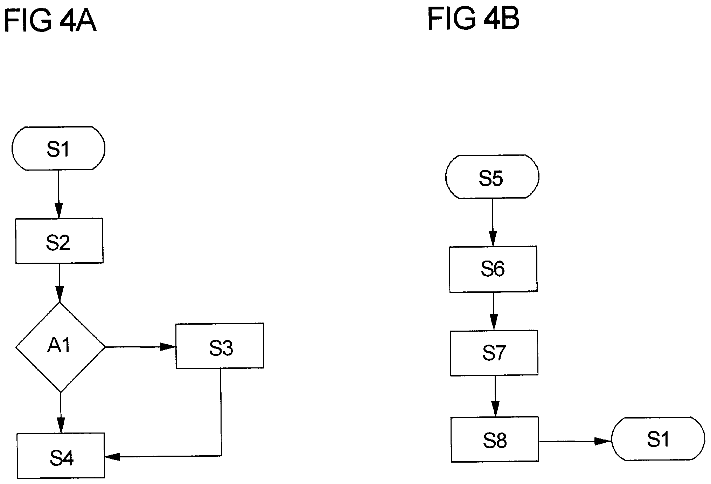

In den Figuren 4A und 4B sind beispielhaft Ablaufdiagramme dargestellt, die eine mögliche Funktionsweise einer erfindungsgemäßen Aufbewahrungsvorrichtung verdeutlichen sollen, die beispielsweise in die Mittelkonsole 1 der Figur 1 integriert ist. Mit der Figur 4A werden dabei einzelne Schritte veranschaulicht, die beim Einlegen eines neuen Gegenstands in ein Fach 610 der Aufbewahrungsvorrichtung ausgeführt werden. Die Figur 4B wiederum veranschaulicht einzelne Verfahrensschritte bei der Auswahl eines bestimmten Faches 610 durch einen Nutzer an einer Anzeigevorrichtung, wie z. B. der Displayeinheit 7 oder dem Mobilgerät 8, und die Bereitstellung des ausgewählten Faches an einer Entnahmeöffnung unterhalb der Armauflage 3.

In dem Ablaufdiagramm der Figur 4A wird in einem ersten Schritt S1 zunächst das Öffnen der Armauflage 3 als ein Bedienereignis detektiert. Hierfür sind beispielsweise an der Mittelkonsole 1 entsprechende Bewegungs- und/oder optische Sensoren und/oder elektrische Kontakte vorgesehen.

Unmittelbar nach dem Öffnen der Armauflage 3, nach einem definierten Zeitraum nach dem Öffnen der Armauflage 3 oder auch erst nach dem Schließen der Armauflage 3 wird in einem nachfolgenden Schritt S2 über die Steuerelektronik der Steuereinheit 4 das Erstellen eines Bildes des an der Entnahmeöffnung vorliegenden Faches 610 oder der mehreren an der Entnahmeöffnung vorliegenden Fächer 610 durch die Kamera 41 ausgelöst. Das Bild oder die Bilder vom Inhalt des Faches bzw. der Fächer 610 wird/werden in dem Speicher der Steuereinheit 4 abgelegt, so dass dieses Bild bzw. diese Bilder zur Information des Nutzers an der Displayeinheit 7 und/oder dem Mobilgerät 8 abrufbar sind.

Bei einer sich daran anschließenden Abfrage A1 wird über die Steuerelektronik der Steuereinheit 4 angefragt, ob der Nutzer zu dem Inhalt eines derzeit über die Entnahmeöffnung zugänglichen Faches 610 oder eines hierin gerade abgelegten Gegenstandes eine zusätzliche Information in dem Speicher ablegen will. Hierbei kann der Nutzer z. B. einen Text eingeben oder eine Sprachnachricht aufzeichnen, um den Inhalt des Faches zu beschreiben.

Bejaht der Nutzer die Abfrage A1 kann in einem nachfolgenden Schritt S3 über die Eingabevorrichtung 5, die Displayeinheit 7 oder das Mobilgerät 8 eine entsprechende Eingabe vorgenommen werden. In einem Ausführungsbeispiel kann ein Nutzer hierfür auch aus mehreren bereits vordefinierten Schlagwörtern wählen.

In einem nachfolgenden Schritt S4 wird dann die zusätzlich eingegebene Information mit dem gespeicherten Bild zu dem jeweiligen Fach verknüpft, so dass einem Nutzer diese zur Verfügung steht. Wurde die Abfrage A1 verneint, wird in dem Schritt S4 in dem Speicher lediglich vermerkt, dass für das jeweilige Fach bzw. Bild keine zusätzliche Information hinterlegt wurde.

Das Funktionsschema der Figur 4B wiederum startet in einem Schritt S5 mit einer Eingabe an der Displayeinheit 7 oder dem Mobilgerät 8, Bilder zum Inhalt der einzelnen Fächer 610 anzuzeigen.

In einem nachfolgenden Schritt S6 wählt ein Nutzer an dem Bildschirm 70 oder 80 ein bestimmtes Bild und damit ein bestimmtes Fach 610 aus.

Anschließend wird in einem Verfahrensschritt S7 von der Steuereinheit 4 ein Antriebsmotor der Verstelleinrichtung 42 angesteuert, um das ausgewählte Fach 610 in eine Entnahmeposition zu verfahren, so dass das Fach 610 bei aufgeklappter Armauflage 3 über die Entnahmeöffnung zugänglich ist.

In einem nachfolgenden Schritt S8 wird dann das Öffnen und gegebenenfalls die Entnahme eines Gegenstands aus dem Fach 610 detektiert. Hieran kann sich dann der Funktionsablauf gemäß der Figur 4A anschließen, um wieder ein neues Bild des gerade zugänglich gemachten Faches 610 zu erfassen.

Mit der erfindungsgemäßen Lösung kann somit insbesondere eine automatisch ausgelöste Aufnahme des Inhalts einzelner Fächer 610 erfolgen, die an verstellbar innerhalb des Aufnahmeraums 2 gelagerten Lagerkassetten 61 vorgesehen sind, sowie die Darstellung des jeweiligen Inhalts auf einem separaten Bildschirm 70 an der Mittelkonsole 1 oder einem Hauptbildschirm an einem Armaturenbrett und gegebenenfalls ergänzend auf einem Bildschirm 80 eines Mobilgeräts 8. Dabei kann auch eine Auswahl eines gewünschten Faches 610 direkt über den jeweiligen Bildschirm 70 oder 80 erfolgen. Des Weiteren lassen sich die Inhalte der einzelnen Fächer 610 auf einfache und ansprechende Weise katalogisieren und um Benutzereingaben ergänzen. Dabei kann die Steuereinheit 4 hierfür auch Mittel zur Sprachsteuerung des Systems umfassen.

### Bezugszeichenliste

- 1: Mittelkonsole
- 2: Aufnahmeraum
- 3: Armauflage (Verschlusselement)
- 33: Schwenkachse
- 4: Steuereinheit
- 41: Kamera (Bilderfassungseinrichtung)
- 42: Verstelleinrichtung
- 43: Sender-Empfänger-Einrichtung
- 5: Eingabevorrichtung
- 50: Bedienknopf (Steuerelement)
- 60o, 60u,: Führungselement
- 60l, 60r 61: Lagerkassette (Aufbewahrungseinheit)
- 610: Fach
- 6A, 6B: Lagereinheit
- 7: Displayeinheit (Anzeigevorrichtung)
- 70: Bildschirm
- 8: Mobilgerät (Anzeigevorrichtung)
- 80: Bildschirm
- A1: Abfrage
- S1-S8: Verfahrensschritte

## Patentansprüche

1. Aufbewahrungsvorrichtung für ein Fahrzeug, die mehrere Fächer zur Ablage von Gegenständen aufweist und wenigstens das Folgende umfasst:
- einen Aufnahmeraum (2) mit einer Entnahmeöffnung,
- mindestens eine innerhalb des Aufnahmeraums (2) untergebrachte Aufbewahrungseinheit (61) mit mindestens einem Fach (610),
- eine Verstelleinrichtung (42), mittels der die mindestens eine Aufbewahrungseinheit (61) innerhalb des Aufnahmeraums (2) verstellbar ist, so dass es von der Stellung der Aufbewahrungseinheit (61) abhängt, ob ein bestimmtes Fach (610) der Aufbewahrungsvorrichtung über die Entnahmeöffnung für einen Nutzer zugänglich ist,
**dadurch gekennzeichnet, dass**
die Aufbewahrungsvorrichtung noch wenigstens das Folgende umfasst:
- einen elektronischen Speicher und eine Bilderfassungseinrichtung (41), mittels der wenigstens ein Bild von einem Inhalt eines der Fächer (610) erstellt und in dem Speicher abgelegt werden kann, und
- eine Steuereinheit (4), mittels der ein von der Bilderfassungseinrichtung (41) erstelltes und in dem Speicher abgelegtes Bild an einer Anzeigevorrichtung (7, 8) anzeigbar ist und mittels der ein bestimmtes, von einem Nutzer ausgewähltes Fach (610) mithilfe der Verstelleinrichtung (42) für den Nutzer über die Entnahmeöffnung zugänglich bereitgestellt werden kann.

2. Aufbewahrungsvorrichtung nach Anspruch 1, **dadurch gekennzeichnet, dass** über die Anzeigevorrichtung (7, 8) durch den Nutzer ein zu einem gespeicherten Bild gehörendes Fach (610) auswählbar ist und mittels der Steuereinheit (4) das ausgewählte Fach (610) für den Nutzer über die Entnahmeöffnung zugänglich bereitgestellt wird.

3. Aufbewahrungsvorrichtung nach Anspruch 1 oder 2, **dadurch gekennzeichnet, dass** die Steuereinheit (4) eine Steuerelektronik aufweist, die automatisch das Erstellen eines Bildes mittels der Bilderfassungseinrichtung (41) auslöst, wenn das Auftreten mindestens eines vorgegebenen Bedienereignisses detektiert wurde.

4. Aufbewahrungsvorrichtung nach Anspruch 3, **dadurch gekennzeichnet, dass** die Entnahmeöffnung durch ein verstellbares Verschlusselement (3) verschließbar ist und die Steuerelektronik dazu ausgebildet und vorgesehen ist, das Erstellen eines Bildes von dem Inhalt desjenigen Faches (610) auszulösen, das über die Entnahmeöffnung zugänglich ist, wenn das Verschlusselement (3) in eine Öffnungsposition und anschließend in eine Schließposition verstellt wird, in der die Entnahmeöffnung durch das Verschlusselement (3) verschlossen ist.

5. Aufbewahrungsvorrichtung nach einem der vorhergehenden Ansprüche, **dadurch gekennzeichnet, dass** sich die Anzeigevorrichtung (7) innerhalb des Fahrzeugs befindet.

6. Aufbewahrungsvorrichtung nach einem der vorhergehenden Ansprüche, **dadurch gekennzeichnet, dass** die Anzeigevorrichtung (8) außerhalb des Fahrzeugs nutzbar ist.

7. Aufbewahrungsvorrichtung nach Anspruch 6, **dadurch gekennzeichnet, dass** ein mobiles Endgerät (8) die Anzeigevorrichtung umfasst und Mittel (43) zur drahtlosen Kommunikation zwischen dem mobilen Endgerät (8) und der Steuereinheit (4) vorgesehen sind.

8. Aufbewahrungsvorrichtung nach einem der vorhergehenden Ansprüche, **dadurch gekennzeichnet, dass** eine Eingabevorrichtung (5) vorgesehen ist, mittels der ein Nutzer zu dem Inhalt des jeweiligen Faches (610) eine Eingabe vornehmen und abspeichern kann.

9. Aufbewahrungsvorrichtung nach Anspruch 8, **dadurch gekennzeichnet, dass** zu den einzelnen Fächern (610) eingegebene und abgespeicherte Eingaben mittels der Steuereinheit (4) durch einen Nutzer durchsuchbar sind, um nach einer bestimmten Eingabe suchen zu können.

10. Aufbewahrungsvorrichtung nach einem der vorhergehenden Ansprüche, **dadurch gekennzeichnet, dass** die Verstelleinrichtung (42) wenigstens ein umlaufendes Antriebselement zum Verstellen der mindestens einen Aufbewahrungseinheit (61) umfasst.

11. Aufbewahrungsvorrichtung nach einem der vorhergehenden Ansprüche, **dadurch gekennzeichnet, dass** die Aufbewahrungsvorrichtung mehrere verstellbare Aufbewahrungseinheiten (61) umfasst und/oder eine verstellbare Aufbewahrungseinheit (61) mehrere Fächer (610) aufweist.

12. Aufbewahrungsvorrichtung nach den Ansprüchen 10 und 11, **dadurch gekennzeichnet, dass** die mehreren Aufbewahrungseinheiten (61) mit dem wenigstens einen umlaufenden Antriebselement gekoppelt und bezogen auf eine Umlaufrichtung des Antriebselements hintereinander angeordnet sind.

13. Aufbewahrungsvorrichtung nach einem der vorhergehenden Ansprüche, **dadurch gekennzeichnet, dass** die Aufbewahrungsvorrichtung in eine Mittelkonsole (1) eines Fahrzeugs integriert ist.

14. Verfahren zur Bereitstellung wenigstens eines von mehreren Fächern einer Aufbewahrungsvorrichtung für ein Fahrzeug, so dass dieses für einen Nutzer zugänglich ist, wobei die Aufbewahrungsvorrichtung wenigstens das Folgende umfasst:
- einen Aufnahmeraum (2) mit einer Entnahmeöffnung,
- mindestens eine innerhalb des Aufnahmeraums (2) untergebrachte Aufbewahrungseinheit (61) mit mindestens einem Fach (610) und
- eine Verstelleinrichtung (42), mittels der die mindestens eine Aufbewahrungseinheit (61) innerhalb des Aufnahmeraums (2) verstellbar ist, so dass es von der Stellung der Aufbewahrungseinheit (61) abhängt, ob ein bestimmtes Fach (610) der Aufbewahrungsvorrichtung über die Entnahmeöffnung für einen Nutzer zugänglich ist,
**dadurch gekennzeichnet, dass**
- von einem Inhalt eines jeden Faches (610) mindestens ein Bild erstellt und abgespeichert wird und
- die gespeicherten Bilder an einer Anzeigevorrichtung (7, 8) angezeigt werden, so dass der Nutzer anhand eines angezeigten Bildes ein bestimmtes Fach (610) auswählen kann, und mithilfe der Verstelleinrichtung (42) ein von dem Nutzer ausgewähltes Fach (610) über die Entnahmeöffnung zugänglich bereitgestellt wird.

15. Verfahren nach Anspruch 14, **dadurch gekennzeichnet, dass** eine Aufbewahrungsvorrichtung nach einem der Ansprüche 1 bis 13 vorgesehen ist.

## Claims

1. A storage device for a vehicle which has a plurality of compartments for storing objects and comprises at least the following:
- a receptacle space (2) with a removal opening,
- at least one storage unit (61) which is accommodated inside the receptacle space (2) and has at least one compartment (610),
- an adjustment device (42) by means of which the at least one storage unit (61) can be adjusted within the receptacle space (2), with the result that whether a specific compartment (610) of the storage device is accessible to a user via the removal opening depends on the position of the storage unit (61),
**characterized in that**
the storage device also comprises at least the following:
- an electronic memory and an image-capturing device (41) by means of which at least one image of contents of one of the compartments (610) can be produced and stored in the memory, and
- a control unit (4) by means of which an image which is produced by the image-capturing device (41) and stored in the memory can be displayed on a display device (7, 8), and by means of which a specific compartment (610) which is selected by a user can be made accessible to the user via the removal opening with the aid of the adjustment device (42).

2. The storage device as claimed in claim 1, **characterized in that** a compartment (610) which is associated with a stored image can be selected by the user via the display device (7, 8), and the selected compartment (610) is made accessible to the user via the removal opening by means of the control unit (4).

3. The storage device according to claim 1 or 2, **characterized in that** the control unit (4) has control electronics which automatically trigger the production of an image by means of the image-capturing device (41) if the occurrence of at least one predefined operator control event has been detected.

4. The storage device as claimed in claim 3, **characterized in that** the removal opening can be closed by an adjustable closure element (3), and the control electronics are designed and provided to trigger the production of an image of the content of that compartment (610) which is accessible via the removal opening when the closure element (3) is adjusted into an open position and subsequently into a closed position in which the removal opening is closed by the closure element (3).

5. The storage device as claimed in one of the preceding claims, **characterized in that** the display device (7) is located within the vehicle.

6. The storage device as claimed in one of the preceding claims, **characterized in that** the display device (8) can be used outside the vehicle.

7. The storage device as claimed in claim 6, **characterized in that** a mobile terminal (8) comprises the display device, and means (43) for wireless communication between the mobile terminal (8) and the control unit (4) are provided.

8. The storage device as claimed in one of the preceding claims, **characterized in that** an input device (5) is provided by means of which a user can make an input to the content of the respective compartment (610) and store it.

9. The storage device as claimed in claim 8, **characterized in that** inputs which are made to the individual compartments (610) and stored can be searched through by a user by means of the control unit (4), in order to be able to search for a specific input.

10. The storage device as claimed in one of the preceding claims, **characterized in that** the adjustment device (42) comprises at least one circulating drive element for adjusting the at least one storage unit (61).

11. The storage device as claimed in one of the preceding claims, **characterized in that** the storage device comprises a plurality of adjustable storage units (61), and/or an adjustable storage unit (61) has a plurality of compartments (610).

12. The storage device as claimed in claims 10 and 11, **characterized in that** the plurality of storage units (61) are coupled to the at least one circulating drive element and are arranged one behind the other with respect to a direction of circulation of the drive element.

13. The storage device as claimed in one of the preceding claims, **characterized in that** the storage device is integrated into a central console (1) of a vehicle.

14. A method for making available at least one of a plurality of compartments of a storage device for a vehicle, with the result that said compartment is accessible to a user, wherein the storage device comprises at least the following:
- a receptacle space (2) with a removal opening,
- at least one storage unit (61) which is accommodated inside the receptacle space (2) and has at least one compartment (610), and
- an adjustment device (42) by means of which the at least one storage unit (61) can be adjusted within the receptacle space (2), with the result that whether a specific compartment (610) of the storage device is accessible to a user via the removal opening depends on the position of the storage unit (61),
**characterized in that**
- at least one image of contents of each compartment (610) is produced and stored, and
- the stored images are displayed on a display device (7, 8), with the result that the user can select a specific compartment (610) on the basis of a displayed image, and a compartment (610) which is selected by the user is made accessible via the removal opening by means of the adjustment device (42).

15. The method as claimed in claim 14, **characterized in that** a storage device is provided as claimed in one of claims 1 to 13.

## Revendications

1. Dispositif de rangement pour un véhicule, qui présente plusieurs compartiments servant à déposer des objets et qui comprend au moins ce qui suit :
- un espace de réception (2) avec une ouverture de retrait,
- au moins une unité de rangement (61) abritée à l'intérieur de l'espace de réception (2), avec au moins un compartiment (610),
- un système d'ajustement (42), au moyen duquel l'au moins une unité de rangement (61) peut être ajustée à l'intérieur de l'espace de réception (2) de sorte que dépend de la position de l'unité de rangement (61) la question de savoir si un compartiment (610) défini du dispositif de rangement est accessible à un utilisateur en passant par l'ouverture de retrait,
**caractérisé en ce que**
le dispositif de rangement comprend encore au moins ce qui suit :
- une mémoire électronique et un système de capture d'images (41), au moyen duquel au moins une image d'un contenu d'un des compartiments (610) est créée et peut être enregistrée dans la mémoire, et
- une unité de commande (4), au moyen de laquelle une image créée par le système de capture d'images (41) et enregistrée dans la mémoire peut être affichée au niveau d'un dispositif d'affichage (7, 8) et au moyen de laquelle un compartiment (610) défini choisi par un utilisateur peut être mis à la disposition à l'aide du système d'ajustement (42) avec un accès pour un utilisateur en passant par l'ouverture de retrait.

2. Dispositif de rangement selon la revendication 1, **caractérisé en ce qu'**un compartiment (610) relevant d'une image mémorisée peut être choisi par l'intermédiaire du dispositif d'affichage (7, 8) par l'utilisateur, et le compartiment (610) choisi est fourni avec un accès pour l'utilisateur en passant par l'ouverture de retrait au moyen de l'unité de commande (4).

3. Dispositif de rangement selon la revendication 1 ou 2, **caractérisé en ce que** l'unité de commande (4) présente une électronique de commande, qui déclenche automatiquement la création d'une image au moyen du système de capture d'images (41) quand la survenue d'au moins un événement de commande spécifié a été détectée.

4. Dispositif de rangement selon la revendication 3, **caractérisé en ce que** l'ouverture de retrait peut être fermée par un élément de fermeture (3) pouvant être ajusté, et l'électronique de commande est réalisée et prévue afin de déclencher la création d'une image du contenu du compartiment (610), qui précisément est accessible en passant par l'ouverture de retrait quand l'élément de fermeture (3) est ajusté dans une position d'ouverture et immédiatement après dans une position de fermeture, dans laquelle l'ouverture de retrait est fermée par l'élément de fermeture (3).

5. Dispositif de rangement selon l'une quelconque des revendications précédentes, **caractérisé en ce que** le dispositif d'affichage (7) se trouve à l'intérieur du véhicule.

6. Dispositif de rangement selon l'une quelconque des revendications précédentes, **caractérisé en ce que** le dispositif d'affichage (8) peut être utilisé à l'extérieur du véhicule.

7. Dispositif de rangement selon la revendication 6, **caractérisé en ce qu'**un terminal (8) mobile comprend le dispositif d'affichage, et des moyens (43) servant à la communication sans fil entre le terminal (8) mobile et l'unité de commande (4) sont prévus.

8. Dispositif de rangement selon l'une quelconque des revendications précédentes, **caractérisé en ce qu'**un dispositif d'entrée (5) est prévu, au moyen duquel un utilisateur peut entreprendre une entrée concernant le contenu du compartiment (610) respectif et peut l'enregistrer.

9. Dispositif de rangement selon la revendication 8, **caractérisé en ce que** des entrées entrées et enregistrées concernant les divers compartiments (610) peuvent être consultées par un utilisateur au moyen de l'unité de commande (4) afin de pouvoir rechercher une entrée définie.

10. Dispositif de rangement selon l'une quelconque des revendications précédentes, **caractérisé en ce que** le système d'ajustement (42) comprend au moins un élément d'entraînement en circulation servant à ajuster l'au moins une unité de rangement (61).

11. Dispositif de rangement selon l'une quelconque des revendications précédentes, **caractérisé en ce que** le dispositif de rangement comprend plusieurs unités de rangement (61) pouvant être ajustées, et/ou une unité de rangement (61) pouvant être ajustée présente plusieurs compartiments (610).

12. Dispositif de rangement selon les revendications 10 et 11, **caractérisé en ce que** les nombreuses unités de rangement (61) sont couplées à l'au moins un élément d'entraînement en circulation et sont disposées les unes derrière les autres par rapport à un sens de circulation de l'élément d'entraînement.

13. Dispositif de rangement selon l'une quelconque des revendications précédentes, **caractérisé en ce que** le dispositif de rangement est intégré dans une console centrale (1) d'un véhicule.

14. Procédé servant à mettre à disposition au moins un des nombreux compartiments d'un dispositif de rangement pour un véhicule, de sorte que ce dernier est accessible à un utilisateur, dans lequel le dispositif de rangement comprend au moins ce qui suit :
- un espace de réception (2) avec une ouverture de retrait,
- au moins une unité de rangement (61) abritée à l'intérieur de l'espace de réception (2), avec au moins un compartiment (610), et
- un système d'ajustement (42), au moyen duquel l'au moins une unité de rangement (61) peut être ajustée à l'intérieur de l'espace de réception (2) de sorte que dépend de la position de l'unité de rangement (61) la question de savoir si un compartiment (610) défini du dispositif de rangement est accessible à un utilisateur en passant par l'ouverture de retrait,
**caractérisé en ce que**
- au moins une image est créée et enregistrée d'un contenu de chaque compartiment (610), et
- les images mémorisées sont affichées au niveau d'un dispositif d'affichage (7, 8) de sorte que l'utilisateur peut choisir un compartiment (610) défini à l'aide d'une image affichée, et un compartiment (610) choisi par l'utilisateur est mis à disposition avec un accès en passant par l'ouverture de retrait à l'aide du système d'ajustement (42).

15. Procédé selon la revendication 14, **caractérisé en ce qu'**un dispositif de rangement selon l'une quelconque des revendications 1 à 13 est prévu.
